# EUROPÄISCHE PATENTANMELDUNG

(11) **EP 0 674 956 A2**
(43) Veröffentlichungstag der Anmeldung: **04.10.1995**
(21) Anmeldenummer: 94117829.5
(22) Anmeldetag: 11.11.1994
(51) Int. Cl.: B21D 28/12, B21D 37/04

(54) **Revolverschneidpresse**

(30) Priorität: 30.03.1994 DE 4411121
(71) Anmelder: C. BEHRENS AG, D-31061 Alfeld (DE)
(72) Erfinder: Freter, Heiko, Dipl.-Ing., D-31171 Nordstemmen (DE)
(74) Vertreter: Sobisch, Peter, Dipl.-Ing.

(57) **Zusammenfassung**

Um bei einer, durch zwei, um eine gemeinsame Achse drehbar gelagerten Revolvertellern (1,2) gekennzeichneten Revolverschneidpresse in konstruktiv einfacher Weise neben einer Erhöhung des für Stanzarbeiten verfügbaren Werkzeugbestandes die einzelnen Werkzeuge um ihre Längsachse einstellbar anzuordnen, wird vorgeschlagen, im peripheren Bereich der Revolverteller (1,2) einzelne, um ihre Achsen (5) motorisch drehbar gelagerte, im peripheren Bereich mehrere Werkzeugsätze tragende Einsatzteller (8,9) anzuordnen, deren einzelne Werkzeugsätze jeweils in eine Stanzposition relativ zu der Betätigungsklaue (12) eines Stanzantriebs (11) überführbar sind, wobei die Betätigungsklaue (12) um die genannte Achse (5) drehbar angeordnet ist, wobei über den Drehantrieb der Einsatzteller (8,9) eine Mitnahmewirkung auf die Betätigungsklaue (12) ausübbar ist, so daß entsprechend dem Drehwinkel der Betätigungsklaue der dieser jeweils zugeordnete Werkzeugsatz in entsprechenden Drehwinkelorientierungen bezüglich seiner Längsachse zum Einsatz kommen kann. Die Mitnahmewirkung des Einsatztellers (8) auf die Betätigungsklaue (12) ist inaktivierbar, um beliebige Werkzeugsätze des Einsatztellers mit der Betätigungsklaue (12) zu kuppeln. Es wird somit der Drehantrieb der Einsatzteller (8,9) zur Wahl eines bestimmten Werkzeugsatzes und zur Einstellung der Winkelorientierung dieses Werkzeugsatzes am jeweiligen Einsatzort benutzt.

## Beschreibung

Die Erfindung bezieht sich auf eine Revolverschneidpresse entsprechend dem Oberbegriff des Anspruchs 1.

Derartige Revolverschneidpressen bestehen im Regelfall aus einem System zweier, um eine gemeinsame Achse in definierter Weise drehbarer, im Umfangsbereich Stanzwerkzeuge tragender Revolverteller, die mit einer ortsfesten, an einer Stelle deren Umfangs befindlichen, einen Stanzantrieb aufweisenden Arbeitsstation ausgerüstet sind. Jeder der Werkzeugsätze ist durch entsprechende Drehung der Revolverteller in der Arbeitsstation mit dem Stanzantrieb kuppelbar und besteht aus einem, im wesentlichen durch einen Stempel nebst Stempelhalter gebildeten, im oberen Revolverteller angebrachten Oberwerkzeug und einem, im wesentlichen aus einer Matrize bestehenden, im unteren Revolverteller angebrachten Unterwerkzeug.

Ober- und Unterwerkzeug sind jeweils aufeinander abgestimmt und es weist der Stempel eine charakteristische Querschnittsgestalt auf. Das zu bearbeitende Werkstück, in der Regel relativ flache plattenartige Bleche werden für einen konkreten Stanzvorgang unter Mitwirkung eines Koordinatentisches relativ zum Einwirkungsbereich des Stanzwerkzeugs in der Arbeitsstation positioniert.

Der, in einer solchen Revolverschneidpresse für einen Stanzvorgang zur Verfügung stehende Werkzeugbestand wird durch die Zahl der, im wesentlichen entlang eines Umfangskreises der Revolverteller befindlichen Werkzeugsätze bestimmt. Zur Vergrößerung dieses Werkzeugbestandes ist es aus der DE-37 20 777 C2 bekannt, in einzelnen der, im Umfangsbereich der Revolverteller angeordneten Werkzeugaufnahmen Einsatzteller anzuordnen, die um ihre Zentralachse drehbar sind und ihrerseits im Umfangsbereich mehrere Werkzeugsätze tragen, wobei die Werkzeugsätze der jeweils sich in den oberen und unteren Revolvertellern befindlichen Einsatzteller gleichermaßen - wie oben bereits dargelegt - in ein Ober- und ein Unterwerkzeug unterteilbar sind. Entsprechend der in diesen Einsatztellern aufnehmbaren Werkzeugsätze ergibt sich eine Vervielfachung des Werkzeugbestands.

Bei manchen Stanzvorgängen ist eine Drehung des Werkzeugsatzes um seine Längsachse erforderlich, um ein gewünschtes Stanzbild zu erreichen. Es ist in diesem Zusammenhang aus der DE 39 15 489 C2 bekannt, einzelne Werkzeugsätze um ihre Achsen motorisch drehbar in den Revolvertellern anzuordnen, wobei der Drehantrieb der einzelnen Revolverteller über eine schaltbare Kupplungseinrichtung wahlweise auch zur Drehung einzelner Werkzeugsätze um ihre Achsen nutzbar ist.

Aus der US 5 211 095 ist eine Revolverschneidpresse bekannt, bei welcher die beiden oben dargelegten Varianten derart miteinander kombiniert werden, daß der, in einem Einsatzteller gehaltene Werkzeugsatz bezüglich seiner Längsachse unter unterschiedlichen Drehwinkeln zum Einsatz gelangt. Dies wird über eine Betätigungsklaue erreicht, die gegenüber dem Stößel des Stanzantriebs drehbar gelagert ist, wobei der Betätigungsklaue einerseits und dem Einsatzteller andererseits jeweils voneinander getrennte motorische Antriebe zugeordnet sind. Wesensmerkmal der Betätigungsklaue ist eine Stanznase, die gegenüber dem Einsatzteller derart drehbar ist, daß beliebige der in diesem gehaltenen Werkzeugsätze mit dieser kuppelbar sind. Die beiden Drehantriebe stehen über eine Steuerung zwecks Koordinierung miteinander in Verbindung und es begibt sich auch aufgrund der erforderlichen Antriebsorgane für die Betätigungsklaue und die Einsatzteller ein vergleichsweise kompliziertes System.

Es ist die Aufgabe der Erfindung, eine Revolverschneidpresse der eingangs bezeichneten Art dahingehend auszugestalten, daß trotz der Verwendung von Einsatztellern in einfacherer Weise deren Werkzeugsätze gegenüber einem zu bearbeitenden Werkstück in unterschiedlichen Winkelpositionen bezüglich ihrer Längsachse zum Einsatz gebracht werden können. Gelöst ist diese Aufgabe bei einer solchen Revolverschneidpresse durch die Merkmale des Kennzeichnungsteils des Anspruchs 1.

Erfindungswesentlich ist hiernach, daß zur Verdrehung der Betätigungsklaue einerseits und des Einsatztellers andererseits ein gemeinsamer Drehantrieb vorgesehen ist, über den sowohl die Betätigungsklaue als auch der Einsatzteller um ihre, in der Arbeitsstation der Revolverschneidpresse gemeinsame Achse drehbar sind. Soweit über eine entsprechende Kupplungseinrichtung zumindest eine wahlweise Drehung des Einsatztellers bei feststehender Betätigungsklaue oder eine gemeinsame Drehung der Betätigungsklaue mit dem Einsatzteller möglich ist, kann dieses Prinzip konstruktiv beliebig ausgeführt sein. Entscheidend ist lediglich, daß über die Drehung des Einsatztellers bei feststehender Betätigungsklaue der jeweils zum Einsatz gelangende Werkzeugsatz gewechselt wird, da durch die Stanznase der Betätigungsklaue eine bezogen auf den Einsatzteller definierbare Stanzstation gebildet wird und sich nur der, mit dieser Stanznase zusammenwirkende Werkzeugsatz in einer Arbeitsposition befindet. Eine Drehung der Betätigungsklaue zusammen mit dem Einsatzteller hingegen bewirkt keinen Werkzeugwechsel sondern verändert lediglich die Drehwinkelposition des eingesetzten Werkszeugsatzes relativ zu dem zu bearbeitenden Werkstück. Als Folge dieser Drehung ändert sich allerdings der Einwirkungsort des Stanzwerkzeugs auf dem Werkstück, so daß über ein Koordinatentisch ein entsprechendes Nachpositionieren des Werkstücks erforderlich ist.

Entsprechend den Merkmalen des Anspruchs 2 ist jedem Einsatzteller, gemeint ist der jeweils obere Einsatzteller, ein Haltering zugeordnet, der konzentrisch zur Achse des Einsatztellers angeordnet ist, in Richtung dieser Achse, somit senkrecht zu dem jeweiligen Revolverteller unverschiebbar gehalten ist, jedoch um diese Achse drehbar angeordnet ist. Über den Haltering werden alle Werkzeugsätze eines Revolvertellers in einer definierten Höhenposition gehalten mit Ausnahme desjenigen, der sich innerhalb der, durch eine innenumfangsseitig eingearbeiteten Ausnehmung definierbaren Stanzstation des Einsatztellers befindet. Bei unveränderter Drehwinkelposition dieses Halteringes ändert sich somit die Stanzstation des einzelnen Einsatztellers nicht und es kann durch Drehung des Einsatztellers bei gegenüber dem Revolverteller unverdrehbar gehaltenen Haltering somit ein anderer Werkzeugsatz in die Stanzstation des Einsatztellers überführt werden. Eine Arretierung des Halteringes gegenüber einer Drehung um die Achse des Einsatztellers kann konstruktiv grundsätzlich beliebig ausgeführt sein.

Die Merkmale des Anspruchs 3 sind auf eine besonders einfache Ausbildung der Arretierbarkeit des Halterings gerichtet. Diese Arretierung wird hiernach durch Verschiebung der Betätigungsklaue, insbesondere der an dieser angeformten Stanznase aufgehoben. Nachdem der Haltering verdrehschlüssig mit der Betätigungsklaue kuppelbar ist, ein Vorgang der durch entsprechende Gestaltung der Stanznase praktisch gleichzeitig mit der Aufhebung der Arretierung des Halterings gegenüber dem Revolverteller bewirkt werden kann, besteht in einfachster Weise die Möglichkeit, über eine Drehung des Einsatztellers eine Drehung der Betätigungsklaue und - mit dieser zusammenhängend - eine entsprechende Drehung des Halteringes zu erreichen. Der Drehung des Halteringes entspricht bekanntlich eine entsprechende Drehung des in der Arbeitsstation des Einsatztellers gehaltenen Werkzeugsatzes und - hiermit zusammenhängend - eine entsprechende Drehung der Längsachse des Werkzeugsatzes gegenüber dem zu bearbeitenden Werkstück.

Die Merkmale des Anspruchs 4 sind auf konstruktiv besonders einfache Ausführungsformen der Kupplung des Einsatztellers mit der Betätigungsklaue sowie der Arretierung des Halteringes gerichtet.

Die entsprechend den Merkmalen des Anspruchs 5 gegebene Arretierbarkeit der Halteklaue gegenüber dem Stößel des Stanzantriebes kann grundsätzlich in beliebiger Weise schaltbar ausgeführt sein. Auch hier kann jedoch ein Arretierstift Verwendung finden, der in einer Richtung unter Federvorspannung steht und in der anderen Richtung druckmittelbetätigbar ist.

Die Erfindung wird im folgenden unter Bezugnahme auf das, in den Zeichnungen schematisch dargestellte Ausführungsbeispiel näher erläutert werden. Es zeigen:
Fig. 1 einen Vertikalschnitt der in zwei übereinander angeordneten Revolvertellern eingesetzten Einsatzteller im Bereich der Arbeitsstation einer Revolverschneidpresse in der Ausgangslage;
Fig. 2 eine Schnittdarstellung entsprechend einer Ebene II-II der Fig. 1;
Fig. 3, 5 und 7 Schnittdarstellungen entsprechend derjenigen gemäß Fig. 1 mit aufeinanderfolgenden Arbeitsphasen während der Bearbeitung eines Bleches;
Fig. 4, 6 und 8 jeweils Schnittdarstellungen entsprechend den Ebenen IV-IV der Fig. 3, VI-VI der Fig. 5 und VIII-VIII der Fig. 7.

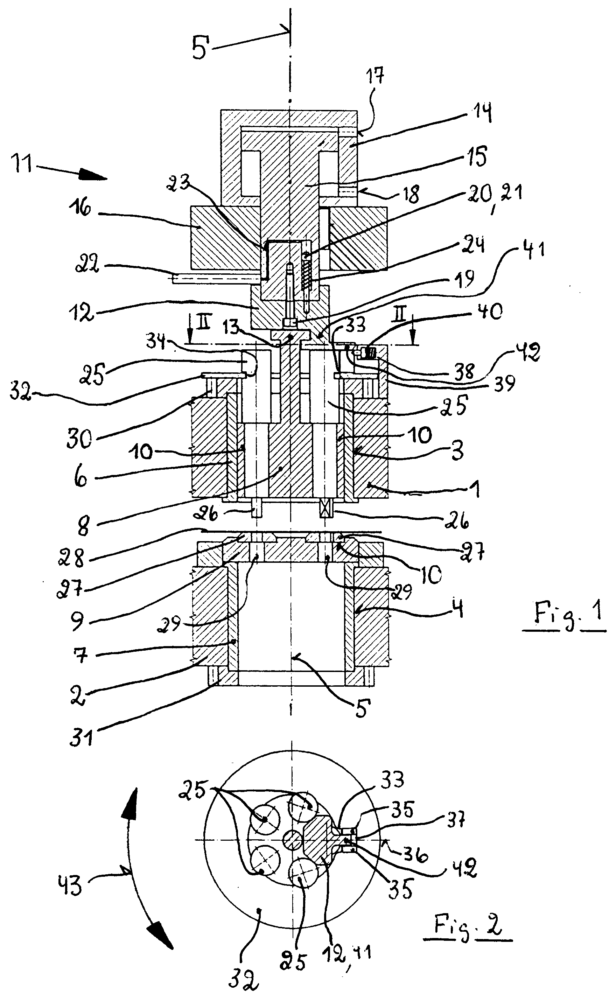

Es wird im folgenden zunächst auf die zeichnerischen Darstellungen der Fig. 1 und 2 Bezug genommen.

Mit 1 und 2 sind in Fig. 1 zwei übereinander angeordnete Revolverteller einer an sich bekannten Revolverschneidpresse bezeichnet, die um eine, in der Zeichenebene der Fig. 1 gelegene, zeichnerisch jedoch nicht wiedergegebene gemeinsame Achse in definierter Weise drehbar gelagert sind. Die Revolverteller 1, 2 sind im Umfangsbereich in im wesentlichen gleichförmiger Verteilung mit Bohrungen 3, 4 versehen, deren Achsen durch entsprechende Drehung der Revolverteller 1,2 in eine zueinander fluchtende Position überführbar sind, so daß mit 5 die gemeinsame Achse der Bohrungen 3,4 bezeichnet ist. In die Bohrungen 3,4 sind jeweils Buchsen eingesetzt, die um ihre Achsen, hier die Achse 5 in definierter Weise drehbar aufgenommen sind. Die Buchsen 6,7 sind im übrigen in axialer Richtung in diesen Bohrungen 3,4 in geeigneter Weise gesichert.

Jede der Buchsen 6,7 dient der Aufnahme eines Einsatztellers, wobei der, der oberen Buchse 6 zugeordnete Einsatzteller mit der Bezugsziffer 8 und der, der unteren Buchse 7 zugeordnete Einsatzteller mit der Bezugsziffer 9 bezeichnet ist. Jeder der Einsatzteller 8,9 ist im Umfangsbereich, und zwar in gleichmäßiger Verteilung entlang eines, zu der Achse 5 konzentrischen Kreises mit Werkzeugaufnahmen 10 ausgerüstet, wobei es sich um Aufnahmen handelt, die an das, im folgenden noch zu beschreibende Stanzwerkzeug jeweils angepaßt sind.

Grundsätzlich können sich in jeder der Bohrungen 3,4 des oberen und unteren Revolvertellers 1,2 derartige Einsatzteller 8,9 befinden, die mit unterschiedlichen Werkzeugen bestückt sind. Gleichermaßen ist es jedoch möglich, daß in einem Teil der Bohrungen 3,4 jeweils lediglich einzelne Werkzeugsätze, bestehend jeweils aus einem Ober- und einem Unterwerkzeug angeordnet sind.

Die Zeichnungsfigur 1 zeigt die Einsatzteller 8,9 in der Arbeitstation der Revolverschneidpresse, in welcher diese mit dem jeweiligen Stanzantrieb 11 gekuppelt sind. Die Kupplung erfolgt formschlüssig über eine, im folgenden noch näher zu beschreibende Betätigungsklaue 12, welche mit einem T-förmigen, sich in Richtung der Achse 5 erstreckenden Halteorgan 13 des oberen Einsatztellers 8 formschlüssig in Eingriff bringbar ist. Es ist grundsätzlich das Halteorgan 13 eines jeden Einsatztellers 8 mit der Betätigungsklaue 12 kuppelbar. Die Halteorgane 13 von in Bohrungen 3,4 direkt eingesetzten Werkzeugsätzen sind ähnlich gestaltet und können gleichermaßen mit der Betätigungsklaue 12 gekuppelt werden. Hierauf soll jedoch im folgenden nicht eingegangen werden.

Der Stanzantrieb 11 besteht im übrigen aus einem, innerhalb eines Zylinders 14 in Richtung der Achse 5 geführten, beidseitig mit einem Druckmittel beaufschlagbaren Kolben 15, der außerhalb des Zylinders 14 in einer, mit dem Rahmengestell der Presse in fester Verbindung stehenden Führung 16 unverdrehbar aufgenommen ist. Mit 17,18 sind Bohrungen des Zylinders 14 bezeichnet, welche dessen Druckmittelbeaufschlagung dienen. Der Kolben 15 bildet gleichzeitig den Stößel des Stanzantriebs.

Die Betätigungsklaue 12 steht mit dem Kolben 15 über eine sich in Richtung der Achse 5 erstreckende Schraube 19 derart in Verbindung, daß eine grundsätzliche Drehbarkeit der Betätigungsklaue 12 gegenüber dem Kolben 15 um die Achse 5, welche gleichzeitig die Achse des Kolbens 15 ist, gewahrt blebt. Mit 20 ist ein Arretierstift bezeichnet, der an einem Ende einen druckmittelbeaufschlagbaren Zylinderkopf 21 trägt, der unter der Wirkung eines, über eine Leitung 22 sowie Verbindungsleitungen 23 geführten Druckmittels entgegen der Rückstellkraft einer Feder 24 in einer Bohrung des Kolbens 15 gleitfähig geführt ist und mit einer Gegenbohrung der Betätigungsklaue 12 im Eingriff steht. Die Betätigungsklaue 12 kann mit einer solchen Gegenbohrung ausgerüstet sein, welche bezüglich einer Drehung um die Achse 5 eine definierte Ausgangslage bildet. Ein Druckabfall in der Leitung 22 hat hierbei zur Folge, daß der Zylinderkopf 21 unter der Wirkung der Feder 24 die genannte Gegenbohrung verläßt und eine Verdrehbarkeit der Betätigungsklaue 12 gegenüber dem Kolben 15 freigibt.

Das in dem oberen Einsatzteller 8 gehaltene Oberwerkzeug besteht im wesentlichen aus den, aus dessen Oberseite herausragenden Werkzeughaltern 25, welche jeweils einen Stempel 26 tragen. Die Stempel 26 der einzelnen Werkzeughalter 25 können eine grundsätzlich beliebige Querschnittsgestalt aufweisen.

Das in den Aufnahmen 10 der unteren Einsatzteller 9 gehaltene Werkzeug besteht im wesentlichen aus einer Matrize 27, deren Querschnittsgestalt dem jeweils zugeordneten Stempel 26 angepaßt ist. Die, durch die Stempel 26 während eines Stanzvorganges aus einem Werkstück 28, hier einem Blech ausgestanzten Blechteile werden über Bohrungen 29 der unteren Einsatzteller 9 entsorgt. Die Matrizen 27 sind unverdrehbar in ihren jeweiligen Aufnahmen 10 untergebracht.

Mit 30,31 sind Zahnräder bezeichnet, die jeweils mit den oberen Buchsen 6 sowie den unteren Buchsen 7 in verdrehfester Verbindung stehen und sich koaxial zu der Achse 5 erstrecken. Diese Zahnräder stehen mit zeichnerisch nicht dargestellten, winkelschrittweise steuerbaren Antrieben in Verbindung, wobei diese Verbindung grundsätzlich beliebig ausgestaltet sein kann. Hierauf soll im folgenden jedoch nicht näher eingegangen werden. Wesentlich ist insoweit, daß über diese Zahnräder 30,31 die jeweiligen Einsatzteller 8,9 in definierter Weise um die Achse 5 drehbar sind.

Mit 32 ist ein Haltering bezeichnet, der in geeigneter, zeichnerisch nicht dargestellter Weise um die Achse 5 drehbar gegenüber dem Revolverteller 1 gelagert ist und der an einer Stelle 33 seines Innenumfangs mit einer Ausnehmung versehen ist. Sämtliche Werkzeughalter 25 sind ihrerseits mit einer Ausnehmung 34 versehen, in welche der Innenumfang des Halterings 32 eingegreift, so daß sämtliche Werkzeughalter 25 bis auf denjenigen, der der Ausnehmung an der Stelle 33 zugeordnet ist, durch den Haltering 32 in einer definierten Höhenposition relativ zu dem Revolverteller 1 gehalten werden. Diese Ausgangsposition der Werkzeughalter 25 ist im übrigen dadurch gekennzeichnet, daß diese oberseitig aus der Ebene des Halterings 32 herausragen. Der, der genannten Ausnehmung des Halterings 32 zugeordnete Werkzeughalter ist hingegen vertikal ausschließlich durch den Einsatzteller 8 gehalten. Diese, der Stelle 33 zugekehrte Position eines Werkzeughalters 25 bildet, wie im folgenden noch erläutert werden wird, die Stanzstation eines Einsatztellers.

Der Haltering 32 ist an seiner Stelle 33 ferner mit zwei, sich vertikal erstreckenden Halteplatten 35 versehen, die sich parallel zueinander und zu einer Durchmesserlinie 36 erstrecken und unmittelbar an die genannte Ausnehmung an der Stelle 33 anschließen. Die Halteplatten 35 weisen eine Höhenerstreckung auf, die genau derjenigen der durch den Haltering 32 gestützten Werkzeughalter 25 entspricht. Die Halteplatten 35 definieren im übrigen einen Spalt 37, in welchen ein entgegen der Wirkung einer Rückstellfeder 38 in einem, mit dem Revolverteller 1 in fester Verbindung stehenden Führungsklotz 39 geführter Arretierbolzen 40 hineinragt. Der Arretierbolzen 40 sichert in der zeichnerisch dargestellten ausgefahrenen Position den Haltering 32 in einer bestimmten Drehwinkelstellung bezüglich der Achse 5.

Wesensmerkmal der Betätigungsklaue 12 ist einerseits ein, das Halterorgan 13 formschlüssig erfassendes Halteteil 41, an welchem eine Stanznase 42 angeformt ist, die in radial auswärtiger Richtung aus dem Halteteil 41 herausragt. In der in Fig. 1 gezeigten Ausgangsposition befindet sich das Halteteil 41 geringfügig oberhalb der Oberkanten der einzelnen Werkzeughalter 25, wobei die radial auswärts vorspringende Länge der Stanznase 42 sowie deren Breite derart bemessen sind, daß bei einer abwärts gerichteten Bewegung der Betätigungsklaue 12 der Arretierbolzen 40 innerhalb des Spaltes 37 entgegen der Rückstellfeder 38 verdrängt wird, so daß durch die, innerhalb des Spaltes 37 aufgenommene Stanznase 42 bei Drehung der Betätigungsklaue 12 um die Achse 5 eine Mitnahmewirkung auf den Haltering 32 ausübbar ist. Hierauf wird im folgenden noch näher eingegangen werden.

Das Halteteil 41 ist im übrigen derart bemessen, daß eine Absenkbewegung der Betätigungsklaue 19 durch benachbarte Werkzeughalter 25 nicht behindert wird, daß hingegen bei einer, über das Zahnrad 30 in den oberen Einsatzteller 8 eingeleiteten Drehbewegung um die Achse 5 in Richtung der Pfeile 43 über die sich außerhalb der Stanzposition befindlichen Werkzeughalter 25 eine Mitnahmewirkung auf das Halteteil 41 und damit die Betätigungsklaue 12 ausübbar ist.

Zeichnerisch nicht dargestellt ist ein Koordinatentisch, über welchen das Werkstück 28 relativ zu der jeweiligen Stanzposition, nämlich des Bereiches, in welchem der jeweilige Stempel 26 zum Einsatz kommt, positioniert wird. Dieser Koordinatentisch kann jedoch von an sich bekannter Form sein, so daß insoweit auf eine detaillierte Beschreibung verzichtet werden kann.

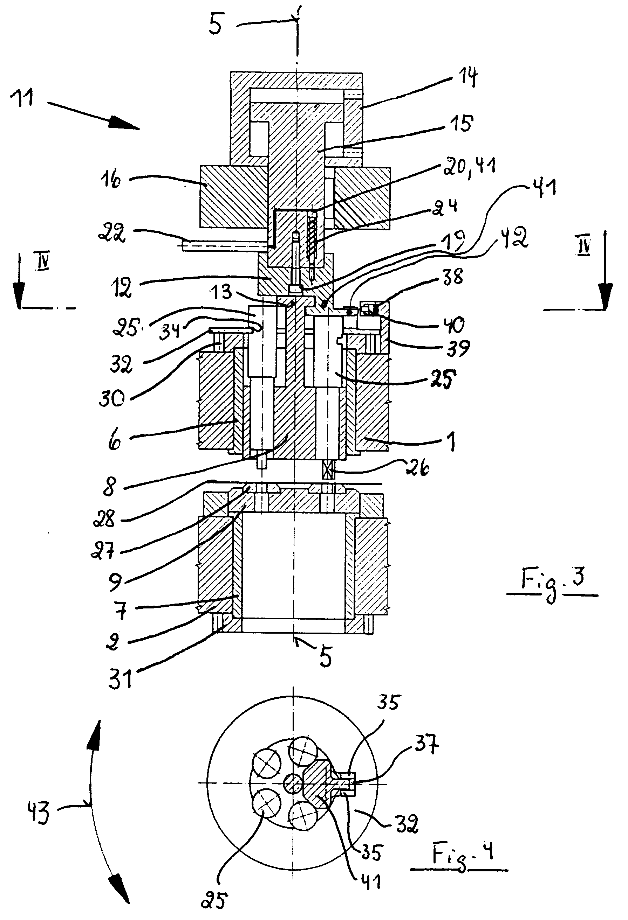

Zur Erläuterung der Wirkungsweise der erfindungsgemäßen Schneidpresse wird im folgenden ergänzend auf die zeichnerischen Darstellungen der Figuren 3 bis 8 Bezug genommen, in welchen übereinstimmende Bauteile entsprechend beziffert sind.

In der in Fig. 2 gezeigten Ausgangsposition befindet sich der Kolben 15 in der Rückzugsstellung, so daß der Zylinder 14 über die Bohrungen 17,18 entsprechend mit einem Druckmittel beaufschlagt ist. Die Leitung 22 steht unter Druck, so daß der Arretierstift 20 ausgefahren ist und mit der Gegenbohrung der Betätigungsklaue 12 im Eingriff steht. Die Betätigungsklaue befindet sich somit in der Ausgangsstellung und steht unverdrehbar mit dem Kolben 15 in Verbindung. Das Halteteil 41 befindet sich geringfügig oberhalb der Oberkanten sämtlicher Werkzeughalter 25, so daß die Revolverteller 1,2 gegenüber der sich in der Ausgangsstellung befindlichen Betätigungsklaue 12 drehbar sind und in eine solche Position überführbar sind, daß ein jeweils gewähltes Paar oberer und unterer Einsatzteller 8,9 sich in der Arbeitsstation befinden, welche dadurch gekennzeichnet ist, daß das Halteorgan 13 des oberen Einsatztellers 8 in Eingriff mit dem Halteteil 41 der Betätigungsklaue 12 steht. Wesensmerkmal der beiden, in der Arbeitsstation befindlichen Einsatzteller 8,9 ist, daß diese jeweils Werkzeugsätze, bestehend jeweils aus einem Ober- und einem Unterwerkzeug enthalten, die hinsichtlich der Querschnittsabmessungen der jeweiligen Stempel 26 und der Matrizen 27 aufeinander abgestimmt sind.

Es wird im folgenden davon ausgegangen, daß an dem Werkstück 28 ein Stanzvorgang unter Auswahl eines dieser Werkzeugsätze durchzuführen ist, wobei der jeweilige Werkzeugsatz unter einer bestimmten Winkelorientierung hinsichtlich seiner Längsachse auf dem Weerkstück 28 zum Einsatz gelangen soll. Es wird ferner davon ausgegangen, daß der, sich in der Zeichnungsfigur 1 unterhalb des Halteteils 41 befindende Werkzeugsatz derjenige ist, mit dem der Stanzvorgang durchgeführt werden soll, daß dieser jedoch in eine andere Winkelorientierung bezüglich seiner Längsachse zu überführen ist.

In dieser Phase ist über den Arretierstift 41 der Haltering 32 in der gezeigten Lage fixiert.

Bei dieser Ausgangslage wird zunächst der Kolben 15 mit Hinblick auf eine geringfügige abwärts gerichtete Bewegung beaufschlagt, als deren Folge die Stanznase 42 in den Spalt 37 eindringt, hier den Arretierbolzen 40 verdrängt und insoweit die Arretierung des Halterings 32 löst. Anschließend wird die Leitung 22 drucklos geschaltet, so daß unter der Wirkung der Feder 24 der Arretierstift 20 in eine Entriegelungsstellung überführt wird und die Betätigungsklaue 12 gegenüber dem Kolben 15 nunmehr drehbar ist. In dieser, in Fig. 3 gezeigten Phase befindet sich die Betätigungsklaue 12 in einer verdrehfesten Verbindung mit dem Haltering 32. Der, der Schaltnase 42 zugekehrte, sich in der Stanzstation befindliche Werkzeughalter 25 ist gegenüber der Ausgangslage entsprechend abgesenkt, wobei diese Bewegung gegenüber dem Haltering 32 dadurch ermöglicht wird, daß sich an der Stelle 33 eine Ausnehmung befindet. Die übrigen Werkzeughalter 25 sind nunmehr in ihrer Höhenposition ausschließlich durch den Haltering 32 über ihre Ausnehmungen 34 gehalten, da der Einsatzteller 8 entsprechend abgesenkt ist. Die Unterkante des Halteorgans 13 des oberen Einsatztellers 8 hat eine Höhenposition erreicht, die in etwa derjenigen der oberen Kanten der durch den Haltering 32 gehaltenen Werkzeughalter 25 entspricht. Der, durch das Halteteil 41 geringfügig verdrängte Stempel 26 befindet sich jedoch noch oberhalb des Werkstücks 28.

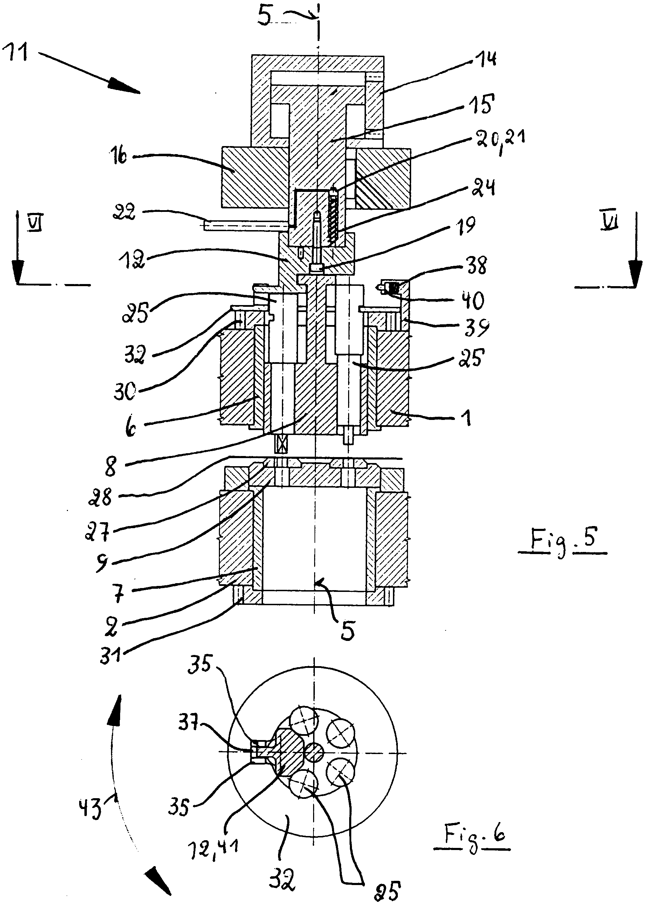

Wie die Fig. 5 und 6 erkennen lassen, wird nunmehr über die, den Zahnrädern 30,31 zugeordneten Antriebe eine Drehbewegung auf die Einsatzteller 8,9 übertragen, in dem hier gezeigten Ausführungsbeispiel um 180° in Richtung der Pfeile 43.

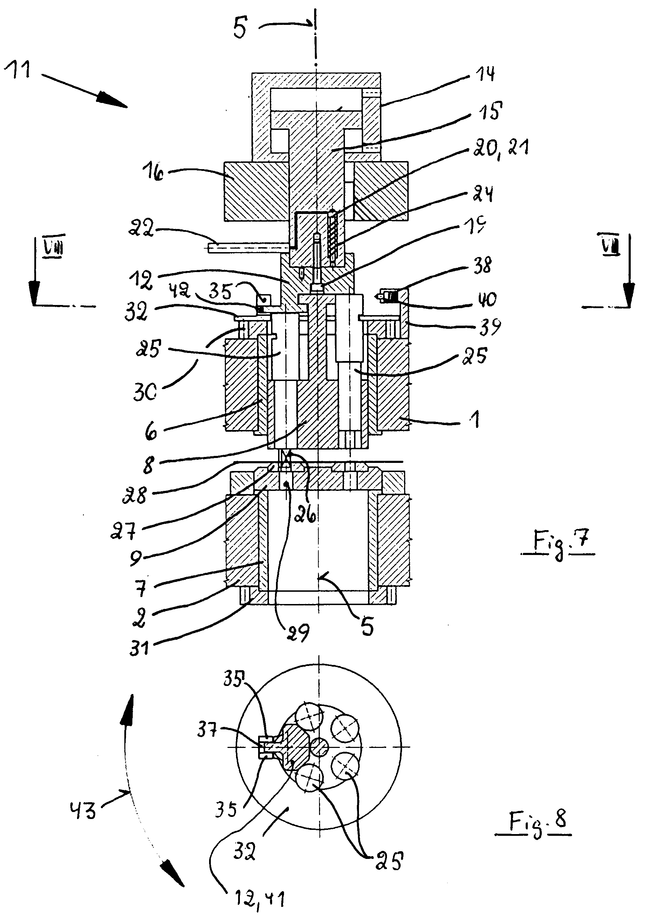

Aufgrund des seitlichen Anliegens der, sich nicht unterhalb der Schaltnase 42 befindlichen Werkzeughalter 25, die seitlich an den angrenzenden Flächen des Halteteils 41 anliegen, kommt es bei der Drehung des Einsatztellers 8 zu einer Mitnahmewirkung auf die Halteklaue 12 und auf diese Weise über die Schaltnase 42 auch auf den Haltering 32, der als Folge dieser Drehbewegung in Richtung der Pfeile 43 in die in Fig. 6 gezeigte Stellung überführt wird. Man erkennt, daß der Stempel 26 bezüglich seiner Längsachse gegenüber der in Fig. 1 gezeigten Stellung nunmehr um einen solchen Winkel verdreht ist, der dem Drehwinkel der Einsatzteller 8,9 entspricht. In der in Fig. 7 gezeigten Stellung wird nunmehr durch Druckbeaufschlagung des Kolbens 15 der Stanzvorgang durchgeführt, als dessen Folge der Stempel 26 abgesenkt wird und der Stanzabfall über die Bohrung 29 entfernt wird. Durch anschließende Beaufschlagung des Kolbens 15 in Gegenrichtung kommt es zu einer Aufwärtsbewegung des Einsatztellers 8, wobei aufgrund der, über das Halteteil 41 ausgeübten Mitnahmewirkung auf den oberen Einsatzteller 8, der seinerseits eine Mitnahmewirkung auf den jeweiligen in der Arbeitsposition befindlichen Werkzeughalter 25 ausübt, letzterer in die in Fig. 1 gezeigte Position zurückgeführt wird, lediglich bezüglich der Achse 5 um 180° gegenüber der in Fig. 1 gezeigten Stellung verdreht.

Falls eine andere Winkellage des jeweils eingesetzten Werkzeugsatzes erforderlich wird, kann der oben dargelegte Rückhub des Einsatztellers 8 in der in Fig. 5 gezeigten Position beendet werden, wobei anschließend über die Zahnräder 30,31 die neue Winkellage eingestellt wird. Nachdem sich jedoch der Einsatzort des Stanzwerkzeugs mit jeder Änderung der Winkellage relativ zu dem Werkstück 28 ändert, muß über den genannten Koordinatentisch eine Nachpositionierung des Werkstücks 28 vorgenommen werden.

Falls ein anderer, in dem jeweiligen Einsatzteller 8 untergebrachter Werkzeugsatz verwendet werden soll, wird dieser zunächst in die in Fig. 1 gezeigte Ausgangslage überführt, in welcher über eine Druckbeaufschlagung 22 der Arretierstift 24 eine verdrehfeste Verbindung zwischen Betätigungsklaue 12 und dem Kolben 15 herstellt. Es werden anschließend die Einsatzteller 8,9 um die Achse 5 gedreht, bis sich der gewünschte Werkzeugsatz unterhalb der Schaltnase 42 befindet. Die weitere Verfahrensweise kann dann - wie oben bereits ausgeführt - erfolgen.

Man erkennt aus obigen Ausführungen, daß über den Drehantrieb der Einsatzteller nicht nur ein bestimmter Werkzeugsatz dieser Einsatzteller in die jeweilige Arbeitsposition überführbar ist, sondern daß über diesen Drehantrieb gleichermaßen auch eine bestimmte Winkelorientierung des Werkzeugsatzes bezüglich seiner Längsachse erzielt wird. Gegenüber dem eingangs dargelegten Stand der Technik ergibt sich hierdurch eine wesentlich konstruktive Vereinfachung des Aufbaus.

## Patentansprüche

1. Revolverschneidpresse mit wenigstens einem, im Umfangsbereich mit Bohrungen (3,4) versehenen, um seine Achse drehbar gelagerten Revolverteller (1,2),
- wobei wenigstens in einem Teil der Bohrungen (3,4) Einsatzteller (8,9) um ihre jeweilige Achse (5) drehbar eingesetzt sind,
- wobei jeder Einsatzteller (8,9) im Umfangsbereich mit Aufnahmen (10) für jeweils einen Werkzeugsatz versehen ist,
- wobei an einer Stelle im Umfangsbereich des Revolvertellers (1,2) eine ortsfeste, mit einem Stanzantrieb (11) versehene Arbeitsstation eingerichtet ist,
- wobei jeder Werkzeugsatz eines Einsatztellers (8,9) mit dem Stanzantrieb (11), insbesondere einer, mit diesem in Verbindung stehenden Betätigungsklaue (12) kuppelbar ist,
- wobei die Betätigungsklaue (12) gegenüber dem Stanzantrieb (11) um eine, mit der Achse dessen Stößels zusammenfallende Achse drehbar gelagert ist,
- wobei jeder Einsatzteller (8) durch Drehung des Revolvertellers (1) mit der Betätigungsklaue (12) kuppelbar ist,
- wobei die Betätigungsklaue (12) mit einer Stanznase (42) zur unmittelbaren Stanzkraftübertragung auf einen ausgewählten Werkzeugsatz des Einsatztellers (8) versehen ist und
- wobei durch Drehung der Betätigungsklaue (12) gegenüber dem Einsatzteller (8) oder umgekehrt um dessen, mit der Achse des Stößels fluchtende Achse (5) jeder Werkzeugsatz des Einsatztellers (8) wahlweise mit der Stanznase (42) kuppelbar ist,
dadurch gekennzeichnet,
- daß die Betätigungsklaue (12) mit dem Einsatzteller (8) verdrehschlüssig kuppelbar ist, so daß mittels des, dem Einsatzteller (8) zugeordneten Drehentriebs entsprechend diesem Kupplungszustand entweder der Einsatzteller gegenüber der Stanznase (42) zwecks Wechsels des jeweils zu benutzenden Werkzeugsatzes oder der jeweils mit der Stanznase (42) gekuppelte Werkzeugsatz hinsichtlich seiner Längsachse relativ zu einem zu bearbeitenden Werkstück (28) gedreht wird.

2. Revolverschneidpresse nach Anspruch 1, dadurch gekennzeichnet,
- daß jedem Einsatzteller (8) ein Haltering (32) zugeordnet ist, der sich koaxial zu dessen Achse (5) erstreckt,
- daß der Haltering (32) relativ zu dem Revolverteller (1) in Richtung der Achse (5) unverschiebbar, um diese Achse jedoch drehbar angeordnet ist,
- daß der Haltering (32) mit einer innenumfangsseitig angeordneten, als Ausnehmung ausgebildeten Stanzstation versehen ist, wobei alle Werkzeugsätze außerhalb dieser Stanzstation durch den Innenumfang des Halterings (32) in Richtung der Achse (5) fixiert werden und
- daß der Haltering (32) gegenüber einer Drehung um die Achse (5) arretierbar ist.

3. Revolverschneidpresse nach Anspruch 1 oder 2, dadurch gekennzeichnet,
- daß der Einsatzteller (8) gegenüber dem Revolverteller (1) in Richtung der Achse (5) verschiebbar angeordnet ist,
- daß die Arretierung des Halterings (32) durch Verschiebung der Betätigungsklaue (32) in Richtung der Achse (5) lösbar ist und
- daß der Haltering (32) verdrehschlüssig mit der Betätigsklaue (12) kuppelbar ist.

4. Revolverschneidpresse nach einem der vorangegangenen Ansprüche 1 bis 3, dadurch gekennzeichnet,
- daß eine verdrehschlüssige Kupplung des Einsatztellers (8) mit der Betätigungsklaue (12) durch einen, über eine Bewegung der letzteren in Richtung der Achse (5) herbeiführbaren seitlichen Formschluß mit den Werkzeughaltern (25) von sich außerhalb der Stanzstation befindlichen Werkzeugsätzen einstellbar ist und
- daß die Arretierung des Halterings (32) gegenüber einer Drehung um die Achse (5) durch einen federbelasteten, gegenüber dem Revolverteller (1) im übrigen festgelegten, über die Stanznase (42) mittels der genannten Bewegung in Richtung der Achse (5) in eine Entriegelungsstellung überführenden Arretierbolzen (40) gebildet wird, der zum Zusammenwirken mit einer, an dem Haltering (32) angebrachten Aufnahmeeinrichtung bestimmt und ausgestaltet ist.

5. Revolverschneidpresse nach einem der vorangegangenen Ansprüche 1 bis 4, dadurch gekennzeichnet, daß die Halteklaue (12) gegenüber einer Drehung um die Achse des Stößels des Stanzantriebs (11) arretierbar ist.
